# EUROPÄISCHE PATENTSCHRIFT

(11) **EP 2 920 534 B1**
(45) Veröffentlichungstag und Bekanntmachung des Hinweises auf die Patenterteilung: **28.09.2016**
(21) Anmeldenummer: 13791982.5
(22) Anmeldetag: 13.11.2013
(51) Int. Cl.: F27B 7/20, C04B 7/43

(54) **BRENNEINRICHTUNG FÜR STÜCKIGE BRENNSTOFFE MIT MECHANISCHEM BRENNSTOFFTRANSPORT**
COMBUSTION APPARATUS FOR FRAGMENTARY FUELS HAVING MECHANICAL FUEL TRANSPORT
SYSTÈME DE COMBUSTION POUR COMBUSTIBLES EN MORCEAUX AVEC TRANSPORT MÉCANIQUE DU COMBUSTIBLE

(30) Priorität: 13.11.2012 DE 102012022179
(43) Veröffentlichungstag der Anmeldung: 23.09.2015
(73) Patentinhaber: KHD Humboldt Wedag GmbH, 51067 Köln (DE)
(72) Erfinder: SCHÜRMANN, Heiko, 51373 Leverkusen (DE)
(86) Internationale Anmeldenummer: PCT/EP2013/073666
(87) Internationale Veröffentlichungsnummer: WO 2014/076103

(56) Entgegenhaltungen:
- EP-A2- 1 783 448
- DE-A1-102010 008 785

## Beschreibung

Die Erfindung betrifft eine Anlage zur Herstellung von Zementklinker, aufweisend mindestens einen Calcinator und mindestens eine Leitung zur Einleitung von Tertiärluft in den Calcinator und mindestens eine Vorrichtung zur Verbrennung von stückigen Brennstoffen, wobei die Vorrichtung zur Verbrennung von stückigen Brennstoffen ein Brennraum ist, der in den Calcinator mündet, und mit einer mechanischen Transportvorrichtung ausgestattet ist, welche die stückigen Brennstoffe in den Calcinator transportiert, wobei die mechanische Transportvorrichtung auf einer schrägen Ebene angeordnet ist, und wobei das Brenngut auf dem Weg über die Transportvorrichtung verbrannt wird und wobei die mechanische Transportvorrichtung (17) ein Schubbodenförderer, ein Treppenrostförderer oder ein Schieber ist, wobei der Schieber bevorzugt das Brenngut auf der kalten Eintragsseite der Vorrichtung (2) zur Verbrennung von stückigen Brennstoffen vorwärts bewegt.

Zur Herstellung von Zementklinker wird ein Gemisch aus kalkhaltigem Gestein und aus silikathaltigem Gestein vermahlen und einer Wärmebehandlung unterzogen, bei welcher der Kalk formell von CO₂ befreit wird und in gebrannten Kalk CaO überführt wird. In einem weiteren Schritt wird das durch die CO₂-Befreiung entsäuerte Rohmehl in der Hitze zu verschiedenen Cälciumsilikatphasen gesintert.

Die Entsäuerung und auch das Sintern sind endotherme Prozesse, die zu ihrer Umsetzung Wärmeenergie benötigen. Diese Wärmeenergie kann aus hochwertigen Brennstoffen gewonnen werden. Neben den klassischen, primären Brennstoffen wie beispielsweise Kohle werden im Zementwerk aus Kostengründen in zunehmendem Maße alternative Brennstoffe als Energieträger eingesetzt, welche häufig aus kommunalen oder industriellen Abfällen gewonnen werden.

Da die Verfügbarkeit und ausreichende Qualität der alternativen Brennstoffe, wie deren für eine exotherme Verbrennung günstige chemische Zusammensetzung, geringe Restfeuchte und günstige Partikelgröße unter verschiedenen Lieferungen nicht gleich sind oder auch nur unter Aufwand hoher Kosten zu beziehen sind, geht man dazu über, auch alternative Brennstoffe einsetzen, welche eine für die exotherme Verbrennungsführung weniger gut geeignete und inhomogene Qualität aufweisen und in der Regel mit einer groben Partikelgröße vorliegen.

Aus dem Stand der Technik sind zur Verbrennung von Sekundärbrennstoffen in Anlagen zur Herstellung von Zement verschiedene Technologien bekannt.

In der EP1334954B1 wird ein Drehrohrofen offenbart, der neben dem schon für den Klinkerbrand vorhandenem Drehrohrofen einer Anlage zur Herstellung von Zement grobe, stückige Brennstoff verschwelt. Die Pyrolysegase und die durch die Verschwelung erzeugte heiße Luft werden in den Calcinator geblasen, um damit die Wärmezufuhr für die im Calcinator durchgeführte Entsäuerung zu unterstützen. Der Betrieb eines zweiten Drehrohrofens ist jedoch mit hohem baulichen Aufwand verbunden und erfordert eine ständige Kontrolle der im Betrieb stets heißen Mechanik.

Aus der EP0764614A2 ist eine Zementklinkerproduktionslinie mit einem neben der Calciniereinrichtung installierten, als Nebenreaktor betriebenen separaten Schachtvergaser bekannt, in dem grobstückige Abfallstoffe - insbesondere Altreifen - vergast werden sollen. Dabei wird der Schachtvergaser von oben mit den Altreifen und mit einem Teil der vom Klinkerkühler kommenden Tertiärluft als Vergasungsmittel beschickt. Das im Schachtvergaser entstehende Produktgas wird als Brenngas in den Calcinator geleitet, und die Reststoffe der im Schachtvergaser vergasten Altreifen werden durch eine mechanische Abstoßvorrichtung in den Drehofeneinlaufschacht transportiert. Der Vergasungsprozess im Schachtvergaser kann erheblichen Schwankungen unterliegen, da die im Schachtvergaser aufeinandergestapelten Altreifen während ihrer thermischen Behandlung nicht umgeschichtet werden. Die in dem Schachtvergaser pyrolysierten Altreifen werden daher in der Hitze von eingeführter heißer Tertiärluft nur zu einem brennbaren Gas umgesetzt, welches mit schwankendem Brennwert in den Calcinator zur Nachverbrennung und zur Erzeugung einer reduktiven Verbrennungsatmosphäre in den Calcinator geführt wird. Die verschlackte Asche der Reifen wird am Ende der Pyrolyse, wenn die Reifen am unteren Ende des Schachtes angelangt sind, durch einen Schieber in den Drehofensteigeschacht transportiert, wobei der Schieber im heißen Bereich des Schachtvergasers den jeweils untersten Teil der im Schacht übereinander liegenden Reifen senkrecht zur schwerkraftbedingten Bewegungsrichtung des sich beim Pyrolysieren verdichtenden Schlackebetts herausdrückt.

Aus der WO0109548 ist eine Zementklinkerproduktionslinie bekannt, in welcher neben dem Calcinator ein separater Reaktor installiert ist, der wiederum von oben mit Abfallstoffen gefüllt wird. Die Abfallstoffe sollen im Reaktor mit Tertiärluft aus dem Klinkerkühler verbrannt werden. In den separaten Reaktor wird ebenfalls von oben auch ein Teilstrom des Zementrohmehls eingeführt. Die Abfallstoffe und der Rohmehlteilstrom sollen im Verbrennungsreaktor auf einer oberhalb des Reaktorbodens installierten drehbaren Scheibe abgelegt werden, und durch Drehung der Scheibe sollen die thermisch behandelten Feststoffe ausgeschleust und in den Calcinator eingeschleust werden, und das Verbrennungsabgas wird ebenfalls in den Calcinator eingeführt. Eine Vermischung der Abfallstoffe, besonders wenn dieser grobstückig vorliegt, findet in dem bekannten Verbrennungsreaktor nicht statt, so dass nicht von gleichmäßigen Verbrennungsbedingungen und damit nicht von einer gleichmäßigen Rohmehl-Vorcalcinierung auszugehen ist.

Aus der DE3533775C1 ist eine Anlage zur Herstellung von Zementklinker aus Rohmehl mit Verwertung heizwerthaltiger Abfallstoffe bekannt, bei welcher als Sekundärbrennstoff verwendete Abfallstoffe nach ihrer Trocknung in einen mit Drehofenabgas und einem Teilstrom der Tertiärluft betriebenen Schwelofen zur Pyrolyse, zumindest aber zur Teilverbrennung thermisch behandelt werden. Das Pyrolysegas dieser Verbrennung wird in den Calcinator eingeführt und die festen Pyrolyserückstände werden nach ihrer Aufbereitung und Homogenisierung wenigstens teilweise in den Drehrohrofen eingeführt. Dabei kann der Schwelofen auch als Drehrohrofen ausgebildet sein.

Aus der DE-A-33 20 670, DE-A-34 11 144 und DE-A-35 20 447 ist es bei einer Anlage zur Herstellung von Zementklinker mit Verwertung heizwerthaltiger Abfallstoffe ebenfalls bekannt, die Abfallstoffe in einem separaten Drehofen zu verschwelen bzw. zu verbrennen und das Schwelgas/ Abgas bei der thermischen Rohmehlbehandlung zu nutzen.

In der EP 1 783 448 A2 werden ebenfalls Sekundärbrennstoffe in einer zusätzlichen Brennkammer verbrannt.

In der deutschen Gebrauchsmusterschrift DE 20 2007 006 797 U1 wird eine Brennvorrichtung offenbart, die als schräger Kasten ausgebildet ist und in der Tertiärluftleitung liegt oder einen Bypass dazu bildet. Das Brenngut wird in den schrägen Kasten gegeben und über Stufen während der Verbrennung pneumatisch abgefördert. Bei besonders schwer brennbaren Abfallstücken kann die Brennvorrichtung verstopfen. Dazu kommt es zu Temperaturspitzen, die im Extremfall zu einer Havarie führen können.

Bei der Schwelung oder Verbrennung von Abfallstoffen, insbesondere von grobstückigen Abfallstoffen in einem Drehrohrofen bereitet es Schwierigkeiten, gleichmäßige Bedingungen für die thermische Behandlung zu schaffen. Insbesondere ist es schwierig, das Auftreten von Temperaturspitzen zu vermeiden, die zu unerwünschten Feststoffanbackungen im Drehofen führen können.

Aufgabe der Erfindung ist es deshalb, eine Vorrichtung zur Verbrennung von Sekundärbrennstoffen in einer Anlage zur Herstellung von Zement zur Verfügung zu stellen, welche die Nachteile aus dem Stand der Technik überwindet.

Die der Erfindung zu Grunde liegende Aufgabe wird dadurch gelöst, dass in der Vorrichtung zur Verbrennung von stückigen Brennstoffen ein Brennraum vorgesehen ist, die ein Gitter aufweist, das den Brennraum in einen unteren Bereich und in eine oberen Bereich unterteilt, wobei durch den oberen Bereich Tertiärluft in den Calcinator strömt. Weitere vorteilhafte Ausgestaltungen sind in den Unteransprüchen angegeben.

Nach der Erfindung ist vorgesehen, dass die bisher im Stand der Technik bekannten Technologien abgelöst werden durch eine Vorrichtung, die einen Brennraum aufweist, die eine vertikale Teilung aufweist. Die vertikale Teilung wird durch ein Gitter erzeugt, wobei nur der untere Bereich des Brennraum mit Brenngut bestückt wird. Verstopft den unteren Brennraum, so ist stets gewährleistet, dass genug Teriärluft nachströmt und die Verbrennungsführung im Calcinator nicht gestört wird. Die Vorrichtung zur Verbrennung von stückigem Brenngut eint somit die Vorteile der verschiedenen bekannten Technologien. Die stückigen Brennstoffe werden auf der schrägen Ebene langsam verschwelt oder gar ganz verbrannt. Die mechanische Transportvorrichtung erlaubt, dass auch sehr scher brennbare, stückige Brennstoffe verschwelt oder verbrannt werden. Damit die Brennvorrichtung nicht verstopft durch nicht brennbares Brenngut, sorgt die mechanische Tränsportvorrichtung dafür, dass das schwer brennbare Brenngut ausgestoßen wird und dabei im Drehrohrofen in der Nähe des Drehrohrofenkopfes verbrennt. Dadurch, dass der stückige Brennstoff nicht übereinander gepackt ist, wird sowohl das am unteren Rand als auch das am oberen Ende der Transportvorrichtung vorhandene stückige Brenngut mit Verbrennungsluft durchströmt und kann so vollständig verbrennen. Im Gegensatz zum Schachtvergaser, in dem brennbare Pyrolysegase erzeugt werden, wird in der vorliegenden Vorrichtung zur Verbrennung von stückigem Brenngut das Brenngut nicht zu einem noch brennbaren Pyrolysegas pyrolysiert, sondern verbrannt. Die dabei entstehende Wärme wird gemeinsam mit in die Vorrichtung zur Verbrennung von stückigem Breringut eingeleiteter Tertiärluft in den Calcinator geführt. Ähnlich wie im Schachtvergaser ist bei dieser Anordnung ein nur geringer Transportaufwand erforderlich, jedoch wird Verbrennungswärme statt Pyrolysegas erzeugt. Gegenüber den eingangs erwähnten Drehrohröfen hat die vorliegende Vorrichtung zur Verbrennung von stückigem Brenngut den Vorteil, dass keine aufwändige Antriebsmechanik betrieben werden muss, welche durch die Abwärme der Verbrennung beeinträchtigt ist.

In vorteilhafter Weise ist ein Brennraum der Vorrichtung zur Verbrennung von stückigem Brenngut mit einer feuerfesten Ausmauerung versehen. Dadurch, dass die Verbrennung auf einer schrägen Ebene stattfindet, reibt kein brennendes , stückiges Brenngut an einer feuerfesten Ausmauerung wie in einem Schachtvergaster oder rollt darüber hinweg wie in einem Drehrohrofen.

Um den Brennstoff in die Vorrichtung zur Verbrennung von stückigem Brenngut einzuschleusen, ist eine Aufgabevorrichtung vorgesehen, die das Eindringen von Falschluft in den Calcinator und auch das Aufsteigen von heißen Brenngasen aus dem Brennraum in den Aufgabeschacht verhindert. Dazu ist zwischen ein an der Vorrichtung zur Verbrennung von stückigem Brenngut vorhandener Brennraum und einer Aufgabevorrichtung eine mechanische Schleuse angeordnet, wie eine Zellenradschleuse, eine Schnecke oder ein Doppelklappensystem. Zusätzlich ist der Aufgabeschacht mit einem Schnellschlussschieber versehen, um im Fall einer Havarie den Brennraum von dem Aufgabeschacht zu trennen.

Die schräge Anordnung der Transportvorrichtung mit einem zum Calcinator hin geneigten Boden hat den Vorteil, dass der Brennstoff während der Verbrennung allmählich in Richtung Calcinator abrutscht. Um den Brennstoff beim Weitertransport immer wieder aufzulockern und aufzuschließen, ist nach dem Gedanken der Erfindung vorgesehen, dass der Boden des Brennraums mit Stufen versehen ist.

In Ausgestaltung der Erfindung ist vorgesehen, dass zur Lösung von Brennstoff-Blockagen im Brennraum seitlich und unterhalb des Brennraums Luftstoßgeräte angebracht sind. Diese können mit heftigen Luftpulsen den blockierenden Brennstoff auflockern und wieder transportfähig machen.

Um das Brenngut zu transportieren, ist vorgesehen, dass am kalten Ende eines Brennraums der Vorrichtung zur Verbrennung von stückigem Brenngut ein feuerfestes Schubelement oder einfach ein Schieber vorgesehen ist, der das Brenngut über die schräg angeordnete Transportvorrichtung schiebt. Im einfachsten Fall ist der Schieber in der Nähe der Aufgabevorrichtung angeordnet, der das von der Aufgabevorrichtung herunterfallende frische, stückige Brenngut gegen das schon brennende Brenngut schiebt und dabei nicht der starken Wärmebelastung des schon brennenden Brennguts ausgesetzt ist. Dabei schiebt der Schieber das Brenngut eine schräge Anordnung oder eine Treppe herunter in Richtung Calcinator. Um das stückige Brenngut vorwärts zu transportieren, ist vorgesehen, dass das Schubelement in variabler Frequenz von einem hydraulischen oder mechanischem System vor- und zurückgeschoben wird.

Das Schubelement ist durch seine Anordnung auf der kalten Seite des Brennraums vor einer übermäßigen Wärmelast geschützt. Um die Wärmeanfällige Mechanik noch besser vor Wärme zu schützen ist in Ausgestaltung der Erfindung vorgesehen, dass das Schubelement mit Luft oder einem Flüssigkeitskreislauf gekühlt wird. Dazu ist das Schubelement mit Leitungen versehen, durch das die Kühlluft oder die Kühlflüssigkeit strömt. Eine noch weitere Abschirmung des Schubelements kann in Ausgestaltung der Erfindung durch ein Sperrluftgebläse zur Verfügung gestellt werden. Das Sperrluftgebläse erzeugt eine gasförmige Grenze, durch welche die Wärme aus einem Brennraum der Vorrichtung zur Verbrennung von stückigem Brenngut zurückgehalten wird, da es verhindert, dass heiße Gase in diesen Bereich gelangen, wo der Schieber angeordnet ist.

Zur Verbrennung des stückigen Brennguts wird von einer vorhandenen Tertiärluftleitung Tertiärluft abgezweigt und durch den Brennraum geführt, um die Tertiärluft dort weiter aufzuheizen. Das stückige Brenngut ist in seinen Eigenschaften aber nur schwer voraussehbar und daher kann es leicht passieren, dass sich ausschließlich schlecht brennbares Brenngut in einem Brennraum der Vorrichtung zur Verbrennung von stückigem Brenngut ansammelt und auftürmt. Wenn dabei der gesamte Querschnitt des Brennraums ausgefüllt wird, verengt sich der freie Querschnitt der in den Brennraum eingeführten Tertiärluft mit der Folge, dass die Luftführung in der Anlage zum Calcinator verändert. Dadurch kann die gestufte Verbrennungsführung zusammenbrechen und eine plötzliche Zunahme an NOx in den Abgasen der Anlage zur Herstellung von Zement kann dadurch erfolgen. Um eine unerwünschte Querschnittsverengung auf ein die gestufte Verbrennungsführung abbrechendes Maß zu verhindern, ist vorgesehen, dass in dem Brennraum ein Gitter oder ein Rost vorhanden ist, welchen den Brennraum in einen oberen Bereich und in einen unteren Bereich trennt. Das Brenngut wird beim sich Auftürmen daran gehindert, den gesamten Querschnitt des Brennraums auszufüllen, so dass in den Brennraum eingeführte Tertiärluft durch den oberen Bereich des Brennraums ungehindert hindurch strömen kann. Damit es nicht zur unerwünschten Verengung der Teriärluftführung kommt, ist es in vorteilhafter Ausgestaltung der Erfindung vorgesehen, dass die Tertiärluftieitung oberhalb oder seitlich am Brennraum befestigt ist und dort einmündet.

Um die Menge der Teriärluft in den Brennraum zu kontrollieren, ist ein Schieber in der Tertiärluftleitung vorgesehen. Durch Variation der Tertiärluftmenge bei gegebener Menge stückigen Brennguts in den Brennraum kann die Verbrennung in oxidierender oder reduzierender Atmosphäre zur stickoxidarmen Verbrennung betrieben werden.

Da die Verbrennung des Sekuhdärbrennstoffs durch seine nur schwer vorhersehbaren Eigenschaften in Bezug auf Zündpunkt und Brandneigung schwer zu kontrollieren ist, ist in weiterer Ausgestaltung der Erfindung vorgesehen, dass für eine sichere Zündung des Sekundärbrennstoffes ein Stützbrenner in dem Brennraum der Vorrichtung zur Verbrennung von stückigem Brenngut installiert ist, der vorzugsweise mit einem höherwertigen und sicher vorhersagbaren Abbrandverhalten den Sekundärbrennstoff zündet.

Es kann auch passieren, dass der Sekundärbrennstoff weit besser und intensiver brennt als angenommen. Beispielsweise können brennbare Abfallstoffe, wie Lösemittel oder Farben im Sekundärbrennstoff vorhanden sein. Um zu verhindern, dass der Brennraum überhitzt, kann eine Leitung zu einem Behälter mit kaltem Rohmehl zu, Brennraum führen. Sofern der Brennraum überhitzt, kann durch die Öffnung eines Schiebers oder eines Ventils das kalte Rohmehl in den Brennraum geführt werden, wo es die Wärme aufnimmt und dabei den Brennraum und die dort vorhandenen Brenngase und den Brennstoff kühlt.

Die Vorrichtung zur Verbrennung von stückigem Brenngut erlaubt eine Variation der Verbrennungsbedingungen für das stückige Brenngut, indem die Temperatur durch kaltes Rohmehl herabgesetzt wird, die Brandneigung durch den Stützbrenner verbessert wird oder die Hubfrequenz der Transportvorrichtung verringert oder erhöht wird.

Die Erfindung wird anhand der folgenden Figuren näher erläutert. Es zeigt:
- Fig. 1: eine Skizze einer erfindungsgemäßen Anlage zur Herstellung von Zement,
- Fig. 2: eine Ausschnittsvergrößerung des in Figur 1 hervorgehobenen Details des Brennraums für stückiges Brenngut.

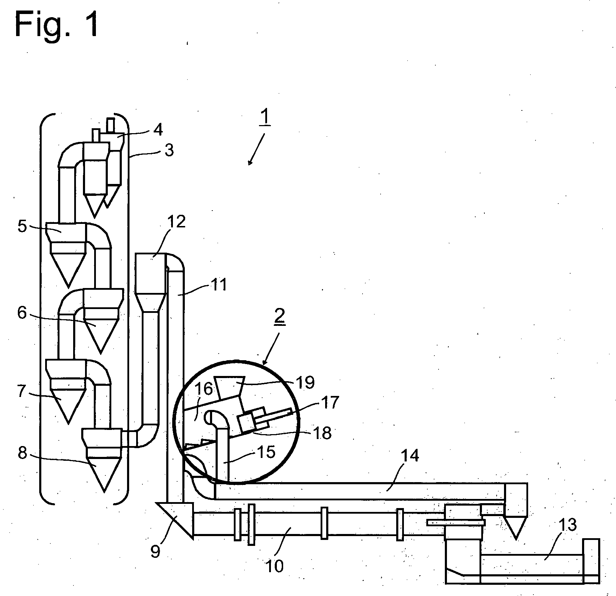

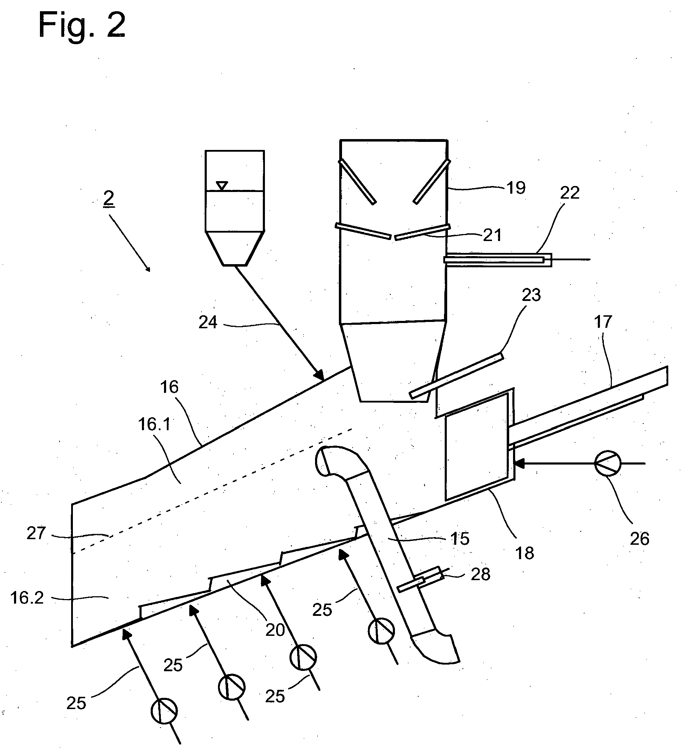

In Figur 1 ist eine erfindungsgemäße Anlage zur Herstellung von Zementklinker dargestellt mit einer Vorrichtung 2 zur Verbrennung von stückigen Brennstoffen. Die Anlage 1 zur Herstellung von Zementklinker besteht in Materialflussrichtung gesehen, aus einem Wärmetauscher 3 mit einer Entstaubungsvorrichtung 4, und 2 bis 5 aufeinander folgenden Wärmetauscherzyklonen 5, 6, 7 und 8, durch welche gemahlenes Rohmehl zur Vorwärmung im Gasgegenstrom fließt. Das Rohmehl aus dem zweituntersten Wärmetauscherzyklon 7 fließt in den Steigschacht oberhalb der Drehrohrofeneinlaufkammer 9, wo es von den aufsteigenden Abgasen eines der Drehrohrofeneinlaufkammer folgenden Drehrohrofens 10 in den Calcinator 11 gerissen wird und während der Verweilzeit im Calcinator 11 formell von CO₂ befreit wird. In einer dem Calcinator 11 folgenden Wirbelkammer 12 wird das Abgas aus dem Drehrohrofen 10 gemeinsam mit den in den Calcinator 11 eingedüsten Brennstoffen ausgebrannt, so dass eine stickoxidarme und kohlenmonoxidarme Abluft entsteht, die in den Wärmetauscher 3 abfließt. Das mit den Abgasen des Drehrohrofens 10 mitgerissene und hier entsäuerte Rohmehl wird im untersten Wärmetauscherzyklon 8 vom Abgas befreit und in einer Schurre in der Drehrohrofeneinlaufkammer 9 geleitet, wo es unterhalb der in den Calcinator 11 aufsteigenden Abgase in den Drehrohrofen 10 zum Sintern fließt. Nachdem das Rohmehl zu Zementklinker gesintert ist und vom Drehrohrofen 10 in den Klinkerkühler 13 abgeworfen wurde, passiert der Zementklinker den Klinkerkühler 13 und wird sodann zur weiteren Verarbeitung eingelagert. Durch den Zementklinker im Klinkerkühler 13 erwärmte Kühlluft fließt als Sekundärluft in den Drehrohrofen 10 und ein größerer Teil der erwärmten Kühlerabluft fließt zu Rekuperationszwecken als Tertiärluft durch die Tertiärluftleitung 14 in den Calcinator 11 zurück. Von dieser Tertiärluftleitung 14 ist nach dem Gedanken der Erfindung eine Abzweigung 15 vorgesehen, die in einen Brennraum 16 der Vorrichtung 2 zur Verbrennung von stückigem Brenngut mündet, die eine Transportvorrichtung 17 aufweist, die auf einer schrägen Ebene 18 angeordnet ist und aus einer Aufgabevorrichtung 19 in den Brennraum 16 fallendes stückiges Brenngut dort verbrennt. Das in Figur 1 durch den Kreis hervorgehobene Detail ist in Figur 2 zur näheren Erläuterung vergrößert dargestellt.

In Figur 2 ist der Brennraum 16 aus Figur 1 vergrößert dargestellt. Dieser Brennraum 16 weist eine Transportvorrichtung 17 auf, die auf einer schrägen Ebene 18 angeordnet ist und stückiges Brenngut über die schräge Ebene 18 herunter schiebt. Die schräge Ebene 18 ist zur Auflockerung des Brennguts während der Passage über die schräge Ebene 18 mit Stufen 20 ausgerüstet, so, dass bei der Passage der Stufen 20 das Brenngut auseinander bricht und umgeschichtet wird. Tertiärluft aus der Abzweigung 15 fließt in den oberen Teil des Brennraums 16, wo diese durch den Abbrand der stückigen Brennstoffe weiter erhitzt wird. Bei der Verbrennung der stückigen Brennstoffe, die aus einer oberen Aufgabevorrichtung 19 in den Brennraum 16 hineinfallen, werden die schon brennenden stückigen Brennstoffe durch die als Schieber ausgebildete Transportvorrichtung 17 nach unten zum Ausgang den Brennraum 16 geschoben. Dabei ist der Schieber am kalten Ende des Brennraums 16 angeordnet, wo das stückige Brenngut noch nicht vollkommen gezündet hat und daher ist der Schieber nicht der hohen Wärmelast ausgesetzt, der er ausgesetzt wäre, wenn der Schieber das schon vollkomen brennende stückige Brenngut schieben würde. Zur Vermeidung des Kühlluftaustritts aus der Aufgabevorrichtung 19 ist nach der Erfindung vorgesehen, dass eine Schleuse 21 vorgesehen ist, durch welche stückiges Brenngut in den Brennraum 16 fallen, aber keine eingeblasene Tertiärluft aus der Abzweigung 15 nach außen gelangen kann. Als Sicherheitsmaßnahme ist vorgesehen, dass ein Schnellschlussschieber 22 die Aufgabevorrichtung 19 von dem Brennraum 16 trennt, wenn dieser ausgelöst wird. Zum Zünden des in seinem Abbrandverhalten schwer vorhersagbaren stückigen Brennguts ist ein Stützbrenner 23 vorgesehen, der das stückige Brenngut sicher zündet. Als weitere Sicherheitsmaßnahme ist eine Leitung 24 für kaltes Rohmehl vorgesehen, durch welche kaltes Rohmehl in den Brennraum 16 eingeleitet werden kann, um die Temperatur in dem Brennraum 16 zu verringern, sollte der Brennwert des eingesetzten Sekundärbrennstoffes unerwartet hoch sein. Das Rohmehl kann im einem eigenen Reservoir vorgehalten werden oder aus der Anlage entnommen werden. Um Blockagen des stückigen Brennguts in dem Brennraum 16 zu vermeiden, kann nach der Erfindung vorgesehen sein, dass Stoßluftgebläse 25 vorhanden sind, die in den Brennraum Luft hinein stoßen, um das Brenngut aufzulockern. Als weitere Kühlmaßnahme für den Schieber als Transportvorrichtung 17 ist ein Sperrluftgebläse 26 vorgesehen, welches verhindert, dass heiße Abluft des Brennraums den Schieber überhitzt. Um zu verhindern, dass bei einer Blockage des stückigen Brennguts der freie Querschnitt den Brennraum 16 für das durch die Abzweigung 15 in den Brennraum 16 einströmende Tertiärluft verengt wird, ist ein Gitter 27 vorgesehen, welches den Brennraum 16 in einen unteren Bereich 16.1 und in einen obere Bereich 16.2 unterteilt. Türmt sich stückiges Brenngut in dem unteren Bereich 16.1 auf, so wird das stückige Brenngut durch das Gitter 27 daran gehindert, den Brennraum 16 vollkommen zu verschließen. Tertiärluft aus der Abzweigung 15 fließt in diesem Fall durch den obere Bereich 16.2 in den Calcinator 11.

**BEZUGSZEICHENLISTE**

| | | | |
|---|---|---|---|
| 1 | Anlage | 16.2 | oberer Bereich |
| 2 | Vorrichtung | | |
| 3 | Wärmetauscher | 17 | Transportvorrichtung |
| 4 | Entstaubungsvorrichtung | 18 | schräge Ebene |
| 5 | Wärmetauscherzyklon | 19 | Aufgabevorrichtung |
| 6 | Wärmetauscherzyklon | 20 | Stufe |
| 7 | Wärmetauscherzyklon | 21 | Schleuse |
| 8 | Wärmetauscherzyklon | 22 | Schnellschlussschieber |
| 9 | Drehrohrofeneinlaufkammer | 23 | Stützbrenner |
| 10 | Drehrohrofen | 24 | Leitung, kaltes Rohmehl |
| 11 | Calcinator | 25 | Stoßluftgebläse |
| 12 | Wirbelkammer | 26 | Sperrluftgebläse |
| 13 | Klinkerkühler | 27 | Gitter |
| 14 | Tertiärluftleitung | 28 | Schieber |
| 15 | Abzweigung | | |
| 16 | Brennraum | | |
| 16.1 | unterer Bereich | | |

## Patentansprüche

1. Anlage (1) zur Herstellung von Zementklinker, aufweisend mindestens einen Calcinator (11) und mindestens eine Leitung (14) zur Einleitung von Tertiärluft in den Calcinator (11) und mindestens eine Vorrichtung (2) zur Verbrennung von stückigen Brennstoffen, wobei die Vorrichtung (2) zur Verbrennung von stückigen Brennstoffen ein Brennraum (16) ist, der in den Calcinator (11) mündet, und mit einer mechanischen Transportvorrichtung (17) ausgestattet ist, welche die stückigen Brennstoffe in den Calcinator (11) transportiert, wobei die mechanische Transportvorrichtung (17) auf einer schrägen Ebene (18) angeordnet ist, und wobei die stückigen Brennstoffe mittels der Transportvorrichtung (17) durch den Brennraum (16) transportierbar und dort verbrennbar sind, und wobei die mechanische Transportvorrichtung (17) ein Schubbodenförderer, ein Treppenrostförderer oder ein Schieber ist, wobei der Schieber die stückigen Brennstoffe auf der kalten Eintragsseite der Vorrichtung (2) zur Verbrennung von stückigen Brennstoffen vorwärts bewegt,
**dadurch gekennzeichnet, dass**
in der Vorrichtung (2) zur Verbrennung von stückigen Brennstoffen ein Brennraum (16) vorgesehen ist, der ein Gitter (27) aufweist, das den Brennraum (16) in einen unteren Bereich (16.2) und in eine oberen Bereich (16.1) unterteilt, wobei durch den oberen Bereich (16.1) Tertiärluft in den Calcinator (11) strömt.

2. Anlage nach Anspruch 1,
**dadurch gekennzeichnet, dass**
von der Leitung (14) zur Einleitung von Tertiärluft eine Abzweigung (15) vorgesehen ist, welche einen Teilluftstrom in die Vorrichtung (2) zur Verbrennung von stückigen Brennstoffen leitet.

3. Anlage nach einem der Anschlüsse 1 bis 2,
**dadurch gekennzeichnet, dass**
eine Leitung (24) für kaltes Rohmehl vorgesehen ist, welche in die Vorrichtung (2) zur Verbrennung von stückigen Brennstoffen mündet.

4. Anlage nach einem der Anschlüsse 1 bis 3,
**dadurch gekennzeichnet, dass**
ein Sperrluftgebläse (25) vorgesehen ist, welche kalte Sperrluft in die Vorrichtung (2) zur Verbrennung von stückigen Brennstoffen einleitet und die mechanische Transportvorrichtung (17) vor Verbrennungswärme schützt.

5. Anlage nach einem der Anschlüsse 1 bis 4,
**dadurch gekennzeichnet, dass**
ein Stützbrenner (22) vorgesehen ist, welche die Verbrennung des stückigen Brennguts unterstützt.

6. Anlage nach einem der Anschlüsse 1 bis 5,
**dadurch gekennzeichnet, dass**
eine Schleuse (20) zu einer Aufgabevorrichtung für Brenngut vorhanden ist, welche das Eindringen von Falschluft in den Calcinator (11) verhindert.

7. Anlage nach einem der Anschlüsse 1 bis 6,
**dadurch gekennzeichnet, dass**
in die Vorrichtung (2) zur Verbrennung von stückigen Brennstoffen Stoßluftgebläse (24) münden, um Blockagen von Brenngut zu lösen.

8. Anlage nach einem der Anschlüsse 1 bis 7,
**dadurch gekennzeichnet, dass**
ein Schnellschlussschieber (21) vorgesehen ist, der im Fall einer Havarie eine Aufgabevorrichtung (19) für Brenngut von einem Brennraum (16) trennt.

## Claims

1. Plant (1) for the production of cement clinker, having at least one calcinator (11) and at least one line (14) for introducing tertiary air into the calcinator (11) and at least one device (2) for burning fragmentary fuels, wherein the device (2) for burning fragmentary fuels is a combustion chamber (16) that discharges into the calcinator (11) and is equipped with a mechanical transport device (17) which transports the fragmentary fuels into the calcinator (11), wherein
the mechanical transport device (17) is arranged on an inclined plane (18), and wherein the fragmentary fuels can be transported, by means of the transport device (17), through the combustion chamber (16) where they can be burnt, and wherein the mechanical transport device (17) is a moving floor conveyor, a stepped grate conveyor or a pusher, wherein the pusher moves the fragmentary fuels forwards on the cold input side of the device (2) for burning fragmentary fuels,
**characterized in that**
there is provided, in the device (2) for burning fragmentary fuels, a combustion chamber (16) having a grille (27) that divides the combustion chamber (16) into a lower region (16.2) and an upper region (16.1), wherein tertiary air flows into the calcinator (11) through the upper region (16.1).

2. Plant according to Claim 1,
**characterized in that**
a branch line (15) is provided on the line (14) for introducing tertiary air and conveys a partial air stream into the device (2) for burning fragmentary fuels.

3. Plant according to either of connections 1 and 2,
**characterized in that**
there is provided a line (24) for cold raw meal which discharges into the device (2) for burning fragmentary fuels.

4. Plant according to one of connections 1 to 3,
**characterized in that**
there is provided a barrier air blower (25) which introduces cold barrier air into the device (2) for burning fragmentary fuels and protects the mechanical transport device (17) from combustion heat.

5. Plant according to one of connections 1 to 4,
**characterized in that**
there is provided an auxiliary burner (22) which supports the burning of the fragmentary fuel.

6. Plant according to one of connections 1 to 5,
**characterized in that**
there is a lock (20) to a delivery device for fuel, which prevents ingress of secondary air into the calcinator (11).

7. Plant according to one of connections 1 to 6,
**characterized in that**
impact air blowers (24) discharge into the device (2) for burning fragmentary fuels, in order to loosen fuel blockages.

8. Plant according to one of connections 1 to 7,
**characterized in that**
there is provided a quick-closing slide (21) which, in the event of damage, separates a delivery device (19) for fuel from a combustion chamber (16).

## Revendications

1. Installation (1) pour la fabrication de clinker, comportant au moins un calcinateur (11) et au moins un conduit (14) pour l'introduction d'air tertiaire dans le calcinateur (11) et au moins un dispositif (2) destiné à la combustion de combustibles en morceaux, le dispositif (2) destiné à la combustion de combustibles en morceaux étant une chambre de combustion (16) qui débouche dans le calcinateur (11) et qui est équipée d'un dispositif de transport (17) mécanique, lequel transporte les combustibles en morceaux dans le calcinateur (11), le dispositif de transport (17) mécanique étant placé sur un plan (18) incliné et les combustibles en morceaux étant transportables à l'aide du dispositif de transport (17) à travers la chambre de combustion (16), et peuvent y être brûlés et le dispositif de transport (17) mécanique étant un convoyeur à plancher mobile, un convoyeur à gradins ou un coulisseau, le coulisseau déplaçant vers l'avant les combustibles en morceaux sur le côté d'entrée froid du dispositif (2) destiné à la combustion de combustibles en morceaux,
**caractérisée en ce que**
dans le dispositif (2) destiné à la combustion de combustibles en morceaux, il est prévu une chambre de combustion (16) qui comporte une grille (27) qui divise la chambre de combustion (16) en une zone inférieure (16.2) et une zone supérieure (16.1), à travers la zone supérieure (16.1), de l'air tertiaire circulant dans le calcinateur (11).

2. Installation selon la revendication 1,
**caractérisée en ce que**
à partir du conduit (14) destiné à introduire de l'air tertiaire, il est prévu une dérivation (15) qui conduit un flux d'air partiel dans le dispositif (2) destiné à la combustion de combustibles en morceaux.

3. Installation selon l'un quelconque des raccords 1 à 2,
**caractérisée en ce**
**qu'**il est prévu un conduit (24) pour de la farine crue froide, lequel débouche dans le dispositif (2) destiné à la combustion de combustibles en morceaux.

4. Installation selon l'un quelconque des raccords 1 à 3,
**caractérisée en ce**
**qu'**il est prévu une soufflante (25) d'air de pressurisation qui introduit de l'air de pressurisation froid dans le dispositif (2) destiné à la combustion de combustibles en morceaux et protège le dispositif de transport (17) mécanique de la chaleur de combustion.

5. Installation selon l'un quelconque des raccords 1 à 4,
**caractérisée en ce**
**qu'**il est prévu un brûleur d'appoint (22) qui assiste la combustion du combustible en morceaux.

6. Installation selon l'un quelconque des raccords 1 à 5,
**caractérisée en ce**
**qu'**un sas (20) vers un dispositif de distribution de produit combustible, qui empêche la pénétration d'air parasite dans le calcinateur (11), est présent.

7. Installation selon l'un quelconque des raccords 1 à 6,
**caractérisée en ce que**
des soufflantes (24) d'air par à-coups débouchent dans le dispositif (2) destiné à la combustion de combustibles en morceaux, pour dissoudre des blocages de produit combustible.

8. Installation selon l'un quelconque des raccords 1 à 7,
**caractérisée en ce**
**qu'**il est prévu un coulisseau (21) à fermeture rapide qui dans le cas d'une avarie, sépare un dispositif de distribution (19) de produit combustible d'une chambre de combustion (16).
